# EUROPEAN PATENT SPECIFICATION

(11) **EP 1 215 359 B1**
(45) Date of publication and mention of the grant of the patent: **18.02.2004**
(21) Application number: 01310281.9
(22) Date of filing: 10.12.2001
(51) Int. Cl.: E05F 11/48

(54) **Window regulator assembly**
Fensterheber
Dispositif de lève-vitre

(30) Priority: 14.12.2000 GB 0030532
(43) Date of publication of application: 19.06.2002
(73) Proprietor: ArvinMeritor Light Vehicle Systems-France, 45600 Sully sur Loire (FR)
(72) Inventor: Maass, Klaus, 38550 Isenbuttel (DE); Moser, Jurgen, 38517 Meine (DE)
(74) Representative: Jones, John Bryn

(56) References cited:
- WO-A-99/59833
- DE-A- 19 821 075
- DE-A- 19 836 705
- FR-A- 2 761 104
- US-A- 4 110 935

## Description

The present invention relates to a window regulator assembly and in particular a window regulator assembly for use in a vehicle such as a car (automobile).

Known window regulators may be made using a variety of mechanisms.

One popular version uses a rail or rails, each of which is fitted with a pulley or other means of cable guidance at its extremities, and some means of attachment to the door. The form of the rail is defined such that a cursor or slider attached to the glass (and which travels with it) would guide the glass in the desired movement. Cables are fitted between some form of drive mechanism (typically a drum mounted to a motor or a manual handle and brake assembly) and the cursor. These cables pass around the cable guidance means and are attached to the cursor. Typically the drive mechanism is fitted to some of support plate and this is mounted on the door inner panel and the drive forces applied as tensile loads to the cables are reacted as compressive loads via external sheaths or 'cable outers) which guide the cables between the drive mechanism and means and of cable guidance in the manner of a bowden cable. The cable outers typically rest in receptacles provided for the purpose in the support plate of the drive mechanism, and in the rail or the means of cable guidance. The cable outer may be provided with adapters to ensure a secure and functional assembly and support means. The kinematic chain so described may also include tensioning means to maintain cable tension to a desired minimum level. The tensioning means may be integrated into the adapters.

This type of window regulator is commonly known as a drum - and - cable type of regulator.

One known embodiment of the above type of window regulator has two generally parallel rails upon which the cursors are caused to travel simultaneously, and which by virtue of the separation between the rails, offers advantages in terms of guidance and support of the glass, particular in a pitching direction with regards to a side window of a vehicle.

This type of window regulator is commonly known as a double lift drum - and - cable type. In particular such known double lift drum- and - cable regulators typically include cable outer (cable sheaths).

WO 99/59833 (Delphi) discloses a door module including a support panel and a structural member having a window regulator thereto. The support panel comprises integral cable guide channels for guiding a bare cable of the window regulator.

US 6354652 (Arquevaux et al) discloses a door module comprising two parallel rails and driving cables arranged in the form of an X between the rails. The module further comprises support for this mechanism.

A further known embodiment of the above type of window regulator has only one rail, but by making a rigid mechanical connection between the mounting of the drive mechanism and the rail, this obviates the need for the cable outer, since the tensile forces in the cables are reacted through the mechanism itself, at least in part. Forces may also be reacted through the vehicle door or other surface to which the window regulator is mounted. This simplifies the assembly of the window regulator significantly and has attendant benefits of reduced costs and weight.

This type of window regulator is commonly known as a single lift bare cable regulator.

An object of the present invention is to provide an improved form of window regulator having improved glass stability and which is simpler to produce.

Thus according to the present invention there is provided a window regulator assembly for assembly into a vehicle including a carrier having a first and second guide rail in a spaced generally parallel relationship, first and second upper cable guides being mounted on the carrier proximate the upper ends of the first and second guide rails respectively, first and second lower cable guides being mounted on the carrier proximate the lower ends of the first and second guide rails respectively with a cable path being defined between the first upper, second upper, first lower and second lower cable guides by a bare cable arrangement, the cable path having at least a first portion connecting the first upper cable guide to the first lower guide, a second portion connecting the second upper guide to the second lower cable, and a first further portion connecting one of the first upper and lower cable guides to one of the second upper and lower cable guides, the bare cable arrangement being drivable in use by a drive means, with a first and second cursor being connected to the bare cable arrangement so as to provide a double lift bare cable window regulator assembly.

Advantageously, the carrier ensures that the cable path remains essentially the same length whether the window regulator is assembled to the door or not, furthermore the carrier also provide support means for any tensioning device necessary to ensure the minimum cable tension is maintained despite the effects of manufacturing tolerances or service wear or stretching of the cable through use.

Support structure of the drive mechanism may be so designed to carry a seal, which in an appropriately designed door or quarter panel and when coupled with a suitably sealed drive mechanism, may obviate the need for further means of water management i.e. sealing between an inner cavity of the door and the associated vehicle.

The invention will now be described, by way of example only, with reference to the accompanying drawings in which:-
FIGURE 1 is an exploded view of a door including a window regulator according to the present invention,
FIGURE 2 is an exploded view of the window regulator of figure 1,
FIGURES 3 to 6 show the way in which the door of figure 1 is assembled and
FIGURE 7 shows a further embodiment of a door.

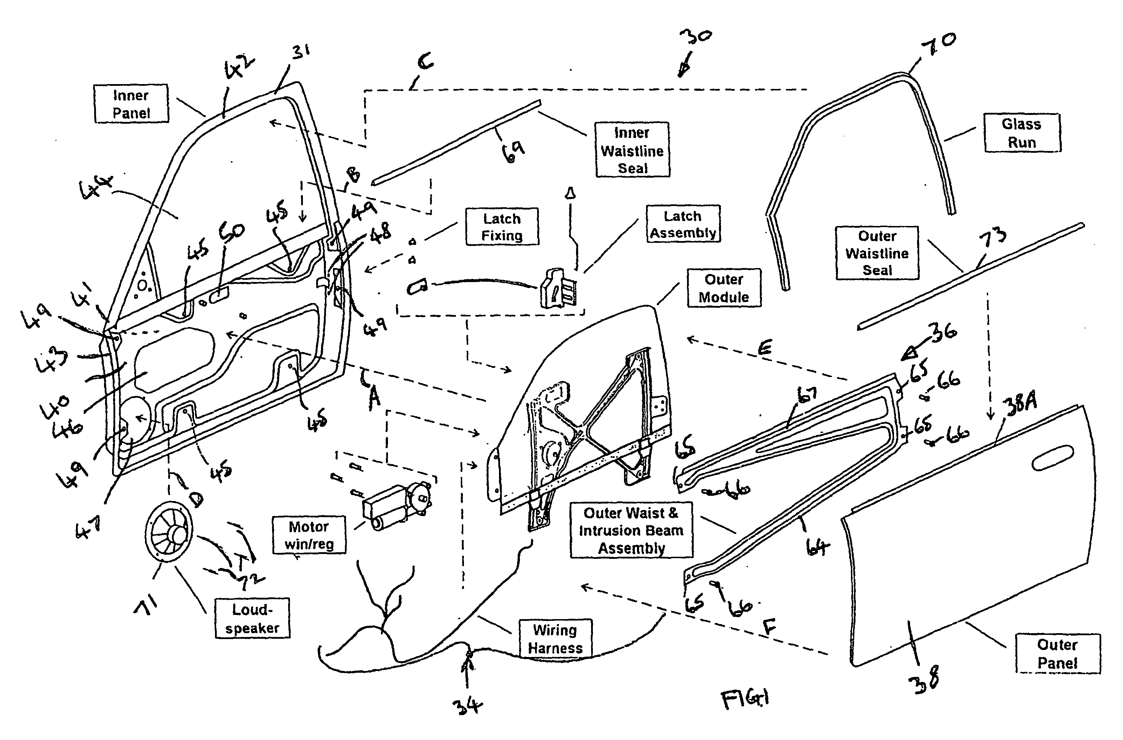

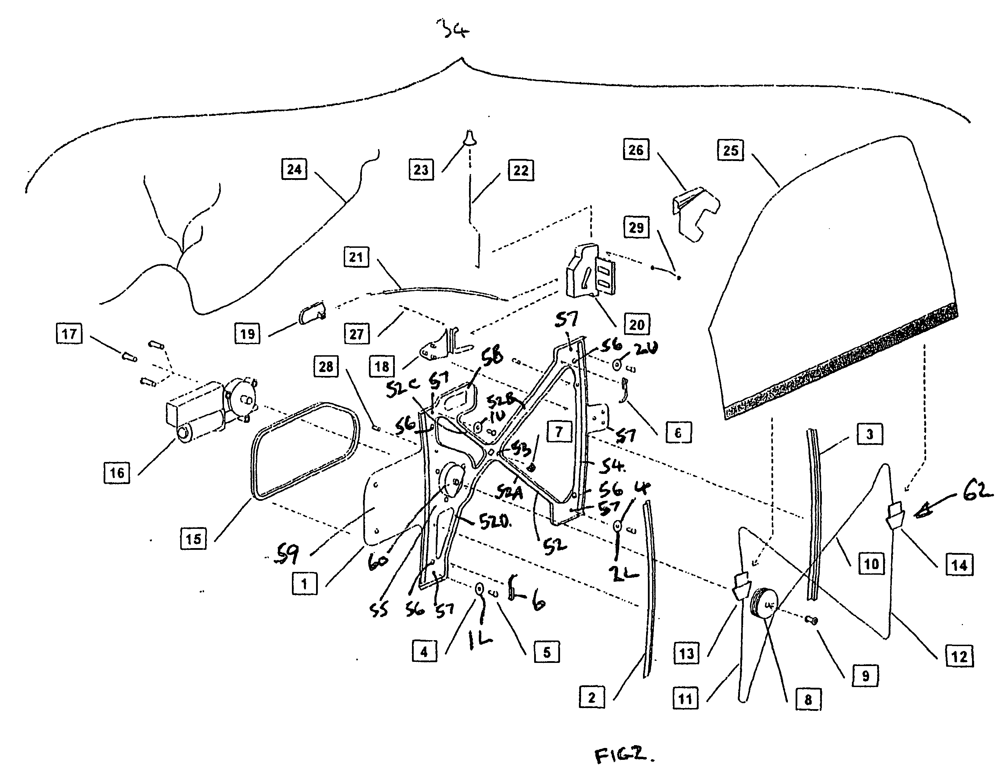

When reference to figures 1 and 2 there is shown a door 30, in this case a front left hand door of a car (automobile).

The door is assembled from various components including a door inner panel 31, a window regulator assembly 34 a combined anti intrusion beam and waist reinforcement beam component 36 and a door outer panel 38. The door outer panel 38 and door inner panel 31 together define a void within the door which is known as the "wet" side of the door. Inner panel 31 is in the form of a pressing having an outer face 40 ("wet face") which faces outwardly relative to an associated vehicle and an inner face 41 ("dry face") which faces inwardly relative to an associated vehicle.

Door inner panel 31 includes an upper window frame 42 and a lower portion 43 which together define a window aperture 44. The door inner panel 31 includes various fixing holes 45 a window regulator motor aperture 46, a loud speaker aperture 47, latch fixing holes 48, holes 49 and inside door release handle 50. Typically the inner panel will include reinforcement (not shown) adjacent to front hinge points and also in the region of the latch. A window regulator assembly 34, the components of which are shown in figure 2 is assembled as a subassembly and this subassembly is then assembled towards the outer face 40 of the door inner panel 31 in the direction of arrow A.

Consideration of figure 2 shows the components of the window regulator assembly in detail. A window regulator carrier 1 is provided as a chassis or frame on which is mounted further components of the window regulator assembly. The carrier 1 is in the form of a pressing and includes a 'X' shaped portion having arms 52A, 52B, 52C and 52D which meet at a central region 53. Ends of arms 52A and 52B remote from central region 53 are connected by a substantially vertical portion 54 of the carrier 1. Similarly ends of arms 52C and 52D remote from the central region 53 are also connected by a substantially vertical portion 55.

Arms 52A, 52B, 52C and 52D are all generally elongate and U shaped in cross section as a result of the pressing process.

Carrier 1 includes holes 56 for mounting of the carrier, via fixing means which pass through hole 56 and through corresponding holes 45.

Carrier 1 further includes holes 57 for mounting of cable guides in the form of pulley wheels 4 via rivets 5.

Carrier 1 further includes mounting plate 57 upon which is mounted flexible latch support 18, mounting plate 58 upon which is mounted inner release handle assembly 19, and window regulator drive means plate in the form of a window regulator motor plate 59.

Motor plate 59 is generally planar in shape and is larger than window regulator motor aperture 46 so that seal 15 can provide for a moisture barrier between the interior of the door and the interior of the vehicle.

It can be seen that seal 15 is a perimetric seal i.e. a perimeter like seal. In particular seal 15 defines a boundary which is of similar shape to but slightly larger than the edge of aperture 46, and also is of similar shape to but slightly smaller than the edge of motor plate 59. When assembled it can be seen that the seal 15 sits on the wet side of door inner panel 31 but on the dry side of motor plate 59. Furthermore, the seal 15 and door aperture 46 are both large enough to allow the passage of the motor 16 during assembly of the window regulator assembly onto the door inner panel.

Furthermore, it can be seen that all four cable guides are outside of the boundaries defined by seal 15 (no embodiments should this not be the case)

Motor plate 59 includes a cable drum housing 60.

Front rail 2 and rear rail 3 are mountable in spaced generally parallel relationship on portions 55 and 56 of carrier 1 respectively and guide cursors 13 and 14.

In further embodiments the front and rear rails could be integral with the carrier.

Two cable tensioner 6 and a bare cable separator 7 are also mounted on the carrier and will be further described below.

Window regulator motor 16 is mounted on motor plate 59 via fixing screws 17.

Latch assembly 20 is mounted on flexible latch support 18 which allows for slight adjustment in the position of latch assembly 20 relative to carrier 1 when the window regulator assembly is assembled into the door inner panel.

An inncr release handle cable 21 connects inner release handle assembly 19 to latch assembly 20.

A sill button link rod 22 is connected to latch assembly 20 at one end and at another end is connected to a sill button 23.

An outer handle connection 29 operably connects the outer door handle with the latch assembly once the handle has been fitted.

A latch security shield 26 is provided above the latch assembly 20 to prevent unauthorised entry to the vehicle by the use of a 'slim Jim'.

A wiring harness 24 connects various electrical components of the window regulator assembly to the main wire harness of the vehicle (not shown).

For convenience the four pulley wheels 4 have been labelled as a first upper (1U), a first lower (1L), a second upper (2U) and a second lower (2L).

A bare cable assembly 62 is provided and includes a lower cable 11 which connects cable drum 8 to the front cursor 13, an upper cable 10 which connects the cable drum 8 to the rear cursor 14, and an intermediate cable 12 which connects the front cursor 13 to the rear cursor 14.

One end of lower cable 11 is wound around the threaded exterior of drum 8 and secured thereto.

One end of cable drum 10 is also wound around a different portion of the threaded exterior of cable drum 10 and secured thereto.

Window glass assembly 25 includes fixings for securing the lower edge thereof to the front and rear cursors 13 and 14.

In use drum 8 is mounted on bush 9 in driving connection with motor 16.

Rotation of the drum 8 by the motor in one direction will cause lower cable 11 to be wound onto the drum and upper cable 10 wound off the drum causing cursors 13 and 14 and hence the window to lower.

Conversely rotation of the drum in the opposite direction by the motor will cause upper cable 10 to be wound onto the drum and lower cable 11 to be wound off the drum resulting in raising of the window glass 25.

It can be seen that the upper cable 10, lower cable 11 and intermediate cable 12 define a cable path which runs between the various pulley wheels 4 and includes a first cable path portion connecting the first upper cable guide to the first lower cable guide, a second cable path portion connecting the second upper cable guide to the second lower cable guide, a first further cable path portion connecting the first upper cable guide to the second lower cable guide and a second further cable path portion connecting the first lower cable guide to the second upper cable guide. Note that the first and second cable path portions are substantially vertical and are substantially parallel to the front and rear rails 2 and 3 which define the direction of vertical movement of the window glass 25. Furthermore the first further portion and second further portion together form a 'X' shape. Note that the second further portion is defined by the portion of the lower cable 11 running between the first lower cable guide and the drum (but not around the drum) in combination with that portion of the upper cable 10 running between the second upper cable guide and the drum (though not around the drum).

In view of the fact that the cable arrangement is a bare cable arrangement, it is necessary to ensure a minimum level of tension in all cables 10, 11 and 12 to ensure that they remain in place on appropriate pulley wheels and cable drum. Depending upon where the window glass is positioned e.g. fully closed with the glass in engagement with the glass run, part open, or fully open with part of the window regulator assembly being engaged with a lower stop, then this determines the various tension levels within the cables 10, 11 and 12, together with the two tensioner springs 6. In view of the fact that arms 52A, 52B, 52C and 52D extend to at least the mounting point of the pulley wheels 4 as do portions 54 and 55, then the carrier forms a triangulated structure at each of the pulley wheels where the tension in the cables 10, 11 and 12 is reacted.

In view of the fact that the first further and second further cable path portions cross and further in view of the fact that as cable drum 8 rotates and that portion of cable 10 which is being wound onto or off from the cable drum moves laterally relative to the door then it can be seen that advantageously a bare cable separator 7 can be mounted at the central region 3 of the carrier 1 in order to guide cable 10 past cable 12 to ensure that they do not 'saw' against each during to the raising and lowering of the window glass 5.

The components as shown in figure 2 can all be pre assembled to form the window regulator assembly 34.

Component 36 is formed as a single pressing and includes an anti intrusion beam 64 designed to prevent intrusion into the vehicle of parts of other vehicles and the like in the event of a road traffic accident.

The component 36 further includes a waist level reinforcement beam which in use supports the upper edge 38A of door outer panel 38 the other edges of door outer panel 38 being supported by the door inner panel.

The component 36 includes fixing holes 65 which co-operate with holes 49 and fixings 66 to secure the component 36 to the inner panel 31.

One method of assembling the door 30 is as follows:-

Inner panel 31 is placed horizontally on a jig such that inner face 41 faces downwards and outer face 40 faces upwards (through the door need not be assembled 'horizontally').

The inner waist line seal 69 and glass run 70 are moved to position (see arrows B and C) and secured on the door inner panel 31 at the periphery of the window aperture 44.

Loudspeaker 71 is moved to position (see arrow D) and is secured to the door inner panel 31 by four screws 72 which are tightened by the assembly operator from above i.e. in a direction facing the outer face 40 (when on the jig faces upwards).

The window regulator assembly 34 is then moved to position in the direction of arrow A and secured in place by screws (not shown) which are screwed into holes 45 from above. The component 36 is then moved to position in the direction of arrow E and fixings 66 are used to secure it to the door inner panel (as described above).

Outer waist line seal 73 is mounted on upper edge 38A of outer panel 38 and this subassembly is then moved in the direction of arrow F and is secured to the door inner panel 31.

In particular it should be noted that the various components of the door are assembled from the outside and this is contrary to known assembly methods where such components are assembled into the door from the inside.

It should also be noted that in view of the motor plate 59 and seal 15, the motor 16 is on the 'dry' side of the door since any moisture or rain entering the lowering portion 43 of the door via the outer waist line seal 73 is prevented from progressing through aperture 46 by seal 15.

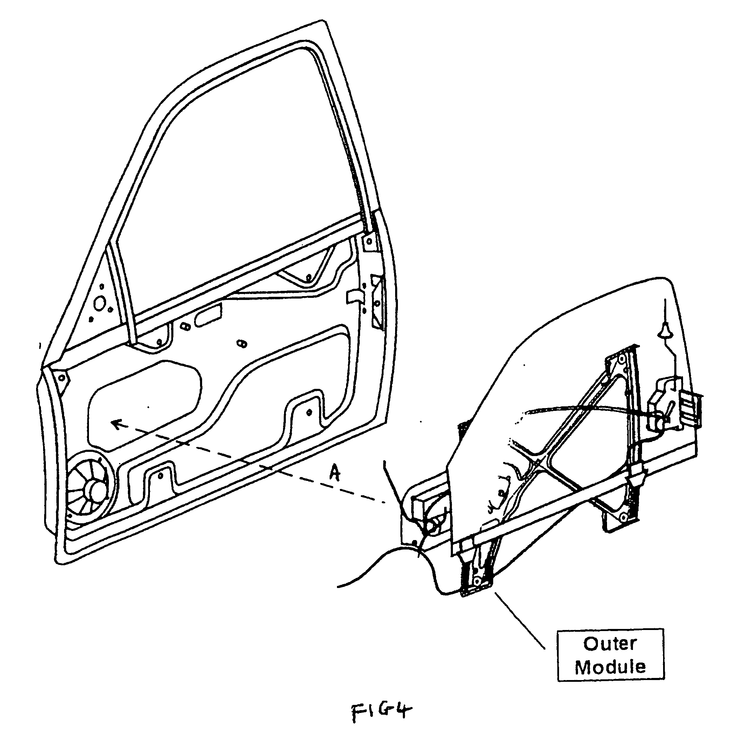

Figures 4 to 6 show the manner in which the door is assembled.

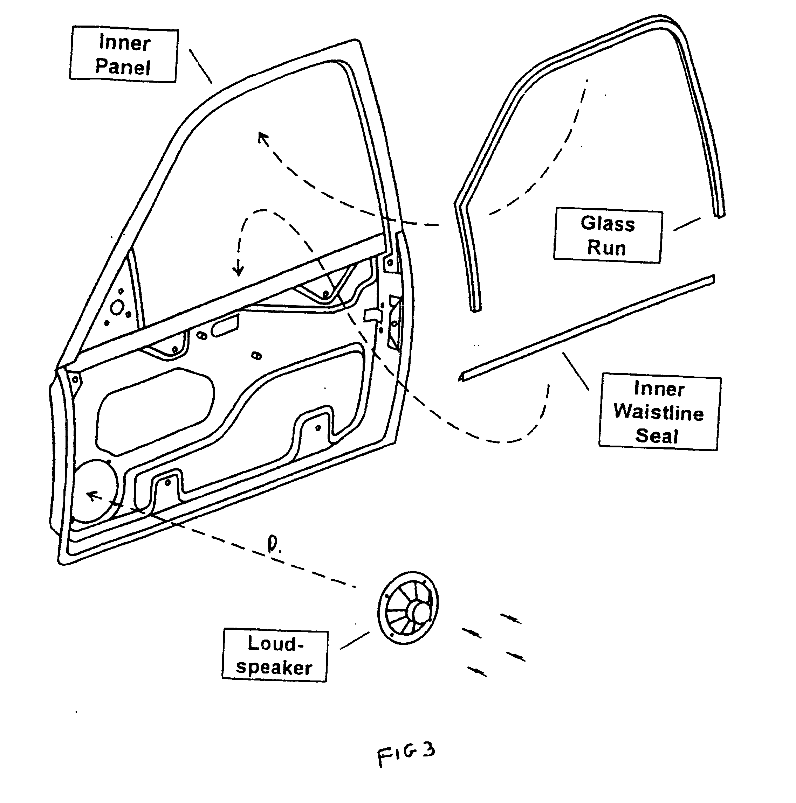

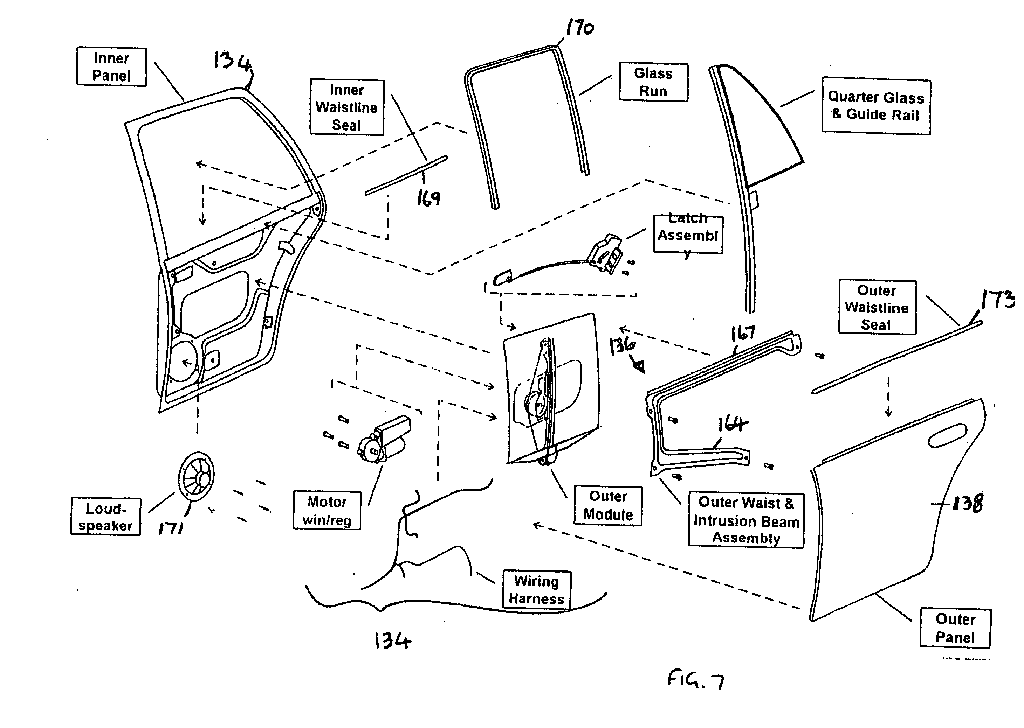

Figure 7 shows a further embodiment of a vehicle door made however not according to the present invention, in which articles which perform substantially the same function as those in figures 1 to 6 are labelled 100 greater.

In particular this embodiment shows a rear vehicle door

Various fixings can be used to secure the various components.

Bolts and screws and other similar threaded fasteners have an assembled axis e.g. the longitudinal axis of the bolt or screw. Furthermore they have an assembly direction defined by the bolt head or screw head. Thus the assembly direction of a screw is from the screw head to the screw point. Thus were such fixings are used the assembly direction can be towards the outer face 40 i.e. inwardly relative to the associated vehicle.

Typically known vehicle doors include fixings having assembly directions which are orientated outwardly relative to the vehicle.

In particular bolts and screws are releasable fixing means.

An alternative fixing means which can be used is a pop rivet which also has an assembly axis and an assembly direction.

Alternative fixing means include adhesive bonding of one component to another or alternatively welding of one component to another.

Furthermore a known method of securing an outer panel to an inner panel is to 'hem' the edge of the outer panel i.e. to deform it around the corresponding edge of the inner panel.

It should be noted that bolts and screws are generally removable so that components being secured by the bolts or screws can be separated without damage to either component. Furthermore pop rivets can be drilled out in order to separate two components again without damage to either component.

Depending upon the design, the adhesive bond between two components can be broken without damage to either component.

However, welding of one component to another component provides a fixing means which prevents the components being separated without damage to one or other component Furthermore where components are welded together, such welding techniques generate extreme amounts of heat and hence this is not a fixing technique which is suitable for refixing a component within a partially assembled door.

Similarly where an outer panel has been hemmed onto an inner panel it is not possible to break the hemmed joint without damaging the outer panel such that it can no longer be reused. Advantageously the fixing means used to secure the various door components allows the various door components to be non destructively separated and also reconnected.

It should be noted that the non destructive separating of components as mentioned herein refers to the non destruction of the components per se and not to be the non destruction of the fixing means. Thus components fixed by an adhesive joint can be non destructively separated without damage to either component whilst nevertheless destroying the adhesive per se. Under these circumstances new adhesive has to be used to reconnect the two components.

Where the door 30 has been assembled using non destructive type fixing means then it is possible to:-
a) remove a damaged outer panel and replace with a new outer panel,
b) remove both a damaged outer panel and a damaged component 36 and replace with a new component 36 and new outer panel,
c) remove an undamaged outer panel and remove an undamaged component 36 in order to gain access and repair other components of the door such as the window regulator assembly (and in particular replace a broken window glass), replace a damaged loudspeaker, or replace a damaged latch.

In further embodiments the component 36 can be formed as a subassembly from an anti intrusion beam and a waist level reinforcement beam. As such in the event that just the anti intrusion beam is damaged then it can be replaced independently of the waist level reinforcement beam and vice versa.

It should be noted that loudspeaker 71 is secured by dedicated screws 72, that as to say screw 72 secure only loudspeaker 71. Similarly component 36 is secured by dedicated fixings 66. Similarly window regulator assembly 34 is also secured by dedicated screws (not shown).

In further embodiments a particular fixing means may be utilised to secure two components. Thus, for example, where the space between the aperture 46 and the aperture 47 is a limited, a loud speaker could be secured by three of the four screws 72 with the fourth screw being utilised to secure both the part of the window regulator assembly 34 and a part of the loud speaker 71. Thus it can be seen that, depending upon the embodiment, various components can be assembled into place, whilst not being fully secured in place. The full securement in place only being possible once a further component has been added.

Furthermore such a subassembly or component 36 can form part of a subassembly with the door outer panel.

A car manufacturer is typically supplied with various car components by component suppliers. The components themselves can be individual items (such as nuts or bolts) or alternatively they can be subassemblies such as engines, gearboxes, axles, bonnets (hoods), boot lids (trunk lids), body shells or doors.

With regards to body shells, bonnets, boots and doors, it is important that the exterior surfaces of these components, of a particular vehicle are all painted with paint from the same batch, in order to avoid slight variations in colour.

Clearly the major exterior coloured surface of the door 30 is the exterior surface of the door outer panel 38. It is possible to paint the exterior surface of the upper window frame in a neutral colour, such a black, without significantly affecting the exterior aesthetic appearance of the vehicle as a whole. Thus an alternative method of assembling the door is as follows.

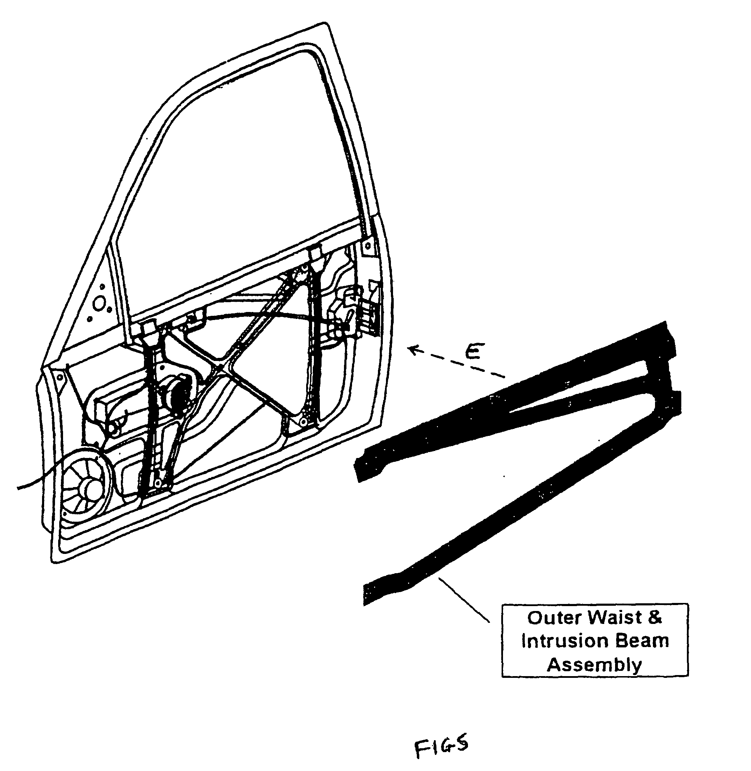

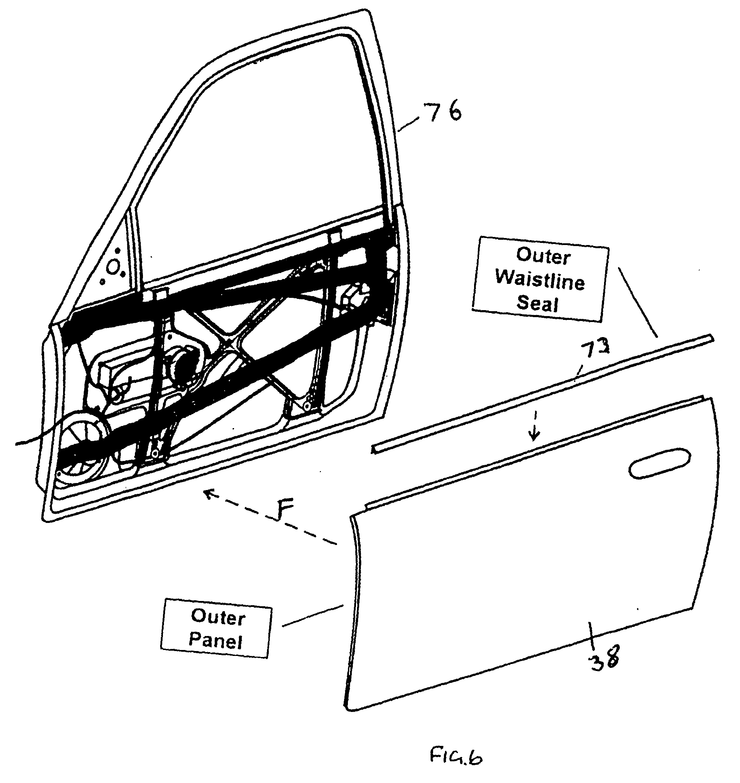

All of those components as shown in figure 5 can be assembled together to form a door subassembly 76 (see figure 6) this can be carried out at a door manufacturers assembly line (also known herein as a first assembly line).

The door outer panel can be provided at the car manufacturers assembly line (also known herein as a second assembly line) wherein it can be allocated to a specific car body shell along with other doors and a bonnet and boot. This set of components can then all be painted simultaneously with paint from the same batch to ensure uniform colour.

The door assembly 76 can then be transported from the door assembly line to the vehicle assembly line where the outer panel can be assembled onto the door and the door can be assembled onto the associated vehicle. Note that the order in which the door outer skin is assembled on to the door and the door is assembled onto the associated vehicle can be carried out in either order.

Note that the door assembly 76 can have various levels of equipment e.g. with or without loudspeaker, with a window regulator motor or with a manual window regulator winder, with a manual only latch arrangement or with a electronic central door locking latch arrangement.

Furthermore there may be several different types of door outer panel at the vehicle assembly line most notably outer panels of differing colour e.g. red, green and blue but also outer panels of differing shapes for fitment onto different car models having a substantially common floor pan.

Furthermore there may be several different inner trim panels at the car assembly plant. Thus by way of example if there are three different door subassemblies 76, four different outer panels 38 and five different inner trims panels, these can be 60 different door types (i.e 3 x 4 x 5 = 60). It can be seen that where a door manufacturer has a first assembly line and a car manufacturer has a second assembly line the door manufacturer only has to supply three different types of doors to the car manufacturers assembly line. This has significant logistic advantages.

## Claims

1. A window regulator assembly (34) for assembly into a vehicle, the assembly including a carrier (1) having a first and second guide rail (2, 3) in a spaced generally parallel relationship, first and second upper cable guides (1U, 2U) being mounted on the carrier (1) proximate the upper ends of the first and second guide rails (2,3) respectively, first and second lower cable guides (1L, 2L) being mounted on the carrier proximate the lower ends of the first and second guide rails (2, 3) respectively with a cable path being defined between the first upper (1U), second upper (2U), first lower (1L) and second lower (2L) cable guides by a bare cable arrangement, the cable path (10, 11, 12) having at least a first portion connecting the first upper cable guide to the first lower cable guide, a second portion connecting the second upper cable guide to the second lower cable guide, and a first further portion connecting one of the first upper and lower cable guides to one of the second upper and lower cable guides, the bare cable arrangement (62) being drivable in use by a drive means (16), with a first and second cursor (13, 14) being connected to the bare cable arrangement (62) so as to provide a double lift bare cable window regulator assembly (34) **characterised in that** the drive means is mounted on a plate (59) of the carrier, the plate having a sealing surface for sealing against a "wet" side of an associated door inner panel (31).

2. A window regulator assembly as defined in claim 1 in which the first further portion of cable path connects the first upper cable guide to the second lower cable guide.

3. A window regulator assembly as defined in claims 1 or 2 in which the cable path includes a second further portion connecting the second upper cable guide to the first lower cable guide.

4. A window regulator assembly as defined in any preceding claim in which the carrier includes an elongate portion (52A, 52B, 52C, 52D, 54, 55) laying substantially parallel and adjacent to part of the cable path.

5. A window regulator assembly as defined in any preceding claim in which the carrier includes an elongate portion (54, 55) laying substantially parallel and adjacent to the first or second portions of the cable path.

6. A window regulator assembly as defined in any preceding claim in which the carrier includes an elongate portion (52A, 52B, 52C, 52D) laying substantially parallel and adjacent to the first or second further portion of the cable path.

7. A window regulator assembly as defined in any preceding claim in which the cable path includes a first drive portion connecting the drive means to at least one of the first upper, second upper, first lower or second lower cable guides, and the carrier includes an elongate portion (52B) laying substantially parallel and adjacent to the first drive portion of the cable path.

8. A window regulator assembly as defined in claim 7 in which the cable path includes a second drive portion connecting the drive means to another of the first upper, second upper, first lower or second lower cable guides and the carrier includes an elongate portion (52D) laying substantially parallel and adjacent to the second drive portion of the cable path.

9. A window regulator assembly as defined in any one of claims 4 to 8 in which said elongate portion extends at least to one of the first upper (1U), second upper (2U), first lower (1L), or second lower (2L) cable guides.

10. A window regulator assembly as defined in any one of claims 4 to 9 in which said elongate portion is generally U shaped in cross section.

11. A window regulator assembly as defined in any preceding claim in which the carrier includes a generally 'X' shaped portion (52A, 52B, 52C, 52D), with arms of the 'X' laying parallel and adjacent to portions of the cable path.

12. A window regulator assembly as defined in claim 11 in which the generally 'X' shaped portion (52A, 52B, 52C, 52D) connects portions of the carrier laying parallel and adjacent to the first and second guide rails (2, 3).

13. A window regulator assembly as defined in any preceding claim in which the carrier (1) includes mountings for at least one functional component of a door such as:-
A loud speaker (71),
An inside door handle (19),
A flexible door latch support (57),
A door latch (20),
A latch security shield (26),
And a bare cable separator (7)

14. A window regulator assembly as defined in any preceding claim in which the drive means is mounted on an inside ("dry") surface of the plate (59) when considering an associated vehicle.

15. A window regulator assembly as defined in any preceding claim in which at least one cable (1U, 2U, 1L, 2L) guide is mounted outside of a boundary defined by the sealing surface.

16. A window regulator assembly as defined in claim 15 in which 2 or 3 or 4 cable guides (1U, 2U, 1L, 2L) are mounted outside of a boundary as defined by the sealing surface.

17. A window regulator assembly as defined in any preceding claim further including a window glass (25).

18. A door including a window regulator assembly as defined in any preceding claim, the vehicle door including a door inner panel (31) having an aperture (46) which allows the passage of the drive means during assembly of the window regulator assembly onto the door.

## Patentansprüche

1. Fensterheberbaugruppe (34) zum Einbau in ein Fahrzeug, wobei die Baugruppe folgendes umfaßt: einen Träger (1) mit einer ersten und einer zweiten Führungsschiene (2, 3) in einer voneinander beabstandeten im allgemeinen parallelen Beziehung, eine erste und eine zweite obere Kabelführung (1U, 2U), die auf dem Träger (1) im Bereich der oberen Enden der ersten bzw. zweiten Führungsschiene (2, 3) angebracht sind, eine erste und eine zweite untere Kabelführung (1L, 2L), die auf dem Träger im Bereich der unteren Enden der ersten bzw. zweiten Führungsschiene (2, 3) angebracht sind, wobei zwischen der ersten oberen (1U), der zweiten oberen (2U), der ersten unteren (1L) und der zweiten unteren (2L) Kabelführung ein Kabelweg durch eine freiliegende Kabelanordnung gebildet wird, wobei der Kabelweg (10, 11, 12) mindestens einen ersten Abschnitt aufweist, der die erste obere Kabelführung mit der ersten unteren Kabelführung verbindet, einen zweiten Abschnitt, der die zweite obere Kabelführung mit der zweiten unteren Kabelführung verbindet, und einen ersten weiteren Abschnitt, der die erste obere oder die erste untere Kabelführung mit der zweiten oberen oder der zweiten unteren Kabelführung verbindet, wobei die freiliegende Kabelanordnung (62) im Gebrauch durch eine Antriebseinrichtung (16) angetrieben werden kann, wobei ein erster und ein zweiter Läufer (13, 14) mit der freiliegenden Kabelanordnung (62) verbunden ist, um eine Doppelhub-Fensterheberbaugruppe (34) mit freiliegendem Kabel bereitzustellen, **dadurch gekennzeichnet, daß** die Antriebseinrichtung auf einer Platte (59) des Trägers montiert ist, wobei die Platte eine Dichtungsfläche aufweist zum Abdichten gegen eine "nasse" Seite einer zugehörigen inneren Türverkleidung (31).

2. Fensterheberbaugruppe nach Anspruch 1, bei der der erste weitere Abschnitt des Kabelwegs die erste obere Kabelführung mit der zweiten unteren Kabelführung verbindet.

3. Fensterheberbaugruppe nach Anspruch 1 oder 2, bei der der Kabelweg einen zweiten weiteren Abschnitt umfaßt, der die zweite obere Kabelführung mit der ersten unteren Kabelführung verbindet.

4. Fensterheberbaugruppe nach einem der vorhergehenden Ansprüche, bei der der Träger einen langgestreckten Abschnitt (52A, 52B, 52C, 52D, 54, 55) umfaßt, der im wesentlichen parallel zu und angrenzend an einen Teil des Kabelwegs verläuft.

5. Fensterheberbaugruppe nach einem der vorhergehenden Ansprüche, bei der der Träger einen langgestreckten Abschnitt (54, 55) umfaßt, der im wesentlichen parallel zu und angrenzend an den ersten oder zweiten Abschnitt des Kabelwegs verläuft.

6. Fensterheberbaugruppe nach einem der vorhergehenden Ansprüche, bei der der Träger einen langgestreckten Abschnitt (52A, 52B, 52C, 52D) umfaßt, der im wesentlichen parallel zu und angrenzend an den ersten oder zweiten weiteren Abschnitt des Kabelwegs verläuft.

7. Fensterheberbaugruppe nach einem der vorhergehenden Ansprüche, bei der der Kabelweg einen ersten Antriebsabschnitt umfaßt, der die Antriebseinrichtung mit mindestens einer von der ersten oberen, zweiten oberen, ersten unteren oder zweiten unteren Kabelführung verbindet, und bei der der Träger einen langgestreckten Abschnitt (52B) umfaßt, der im wesentlichen parallel zu und angrenzend an den ersten Antriebsabschnitt des Kabelwegs verläuft.

8. Fensterheberbaugruppe nach Anspruch 7, bei der der Kabelweg einen zweiten Antriebsabschnitt umfaßt, der die Antriebseinrichtung mit einer anderen von der ersten oberen, zweiten oberen, ersten unteren oder zweiten unteren Kabelführung verbindet, und bei der der Träger einen langgestreckten Abschnitt (52D) umfaßt, der im wesentlichen parallel zu und angrenzend an den zweiten Antriebsabschnitt des Kabelwegs verläuft.

9. Fensterheberbaugruppe nach einem der Ansprüche 4 bis 8, bei der sich der langgestreckte Abschnitt mindestens zu einer von der ersten oberen (1U), zweiten oberen (2U), ersten unteren (1L) oder zweiten unteren (2L) Kabelführung erstreckt.

10. Fensterheberbaugruppe nach einem der Ansprüche 4 bis 9, bei der der langgestreckte Abschnitt im Querschnitt im allgemeinen U-förmig ist.

11. Fensterheberbaugruppe nach einem der vorhergehenden Ansprüche, bei der der Träger einen im allgemeinen X-förmigen Abschnitt (52A, 52B, 52C, 52D) umfaßt, wobei die Arme des 'X' parallel zu und angrenzend an Abschnitte des Kabelwegs verlaufen.

12. Fensterheberbaugruppe nach Anspruch 11, bei der der im allgemeinen X-förmige Abschnitt (52A, 52B, 52C, 52D) Abschnitte des Trägers verbindet, die parallel zu und angrenzend an die erste und die zweite Führungsschiene (2, 3) verlaufen.

13. Fensterheberbaugruppe nach einem der vorhergehenden Ansprüche, bei der der Träger (1) Halterungen für mindestens ein Funktionselement einer Tür umfaßt, wie zum Beispiel:
einen Lautsprecher (71),
einen inneren Türgriff (19),
eine biegsame Türschloßhalterung (57),
ein Türschloß (20),
ein Türschloßsicherungsblech (26),
und einen Abstandshalter (7) für die freiliegenden Kabel.

14. Fensterheberbaugruppe nach einem der vorhergehenden Ansprüche, bei der die Antriebseinrichtung bei einem zugehörigen Fahrzeug auf einer ("trockenen") Innenfläche der Platte (59) montiert ist.

15. Fensterheberbaugruppe nach einem der vorhergehenden Ansprüche, bei der mindestens eine Kabelführung (1U, 2U, 1L, 2L) außerhalb einer durch die Dichtungsfläche gebildeten Grenze montiert ist.

16. Fensterheberbaugruppe nach Anspruch 15, bei der 2 oder 3 oder 4 Kabelführungen (1U, 2U, 1L, 2L) außerhalb einer durch die Dichtungsfläche gebildeten Grenze montiert sind.

17. Fensterheberbaugruppe nach einem der vorhergehenden Ansprüche, die ferner eine Fensterscheibe (25) umfaßt.

18. Tür mit einer Fensterheberbaugruppe nach einem der vorhergehenden Ansprüche, wobei die Fahrzeugtür eine Türinnenverkleidung (31) mit einer Öffnung (46) umfaßt, durch die während der Montage der Fensterheberbaugruppe an der Tür die Antriebseinrichtung eingeführt werden kann.

## Revendications

1. Un dispositif lève-vitre (34) pour montage dans un véhicule, le dispositif incluant un support (1) ayant un premier et un second rails de guidage (2, 3) dans une relation d'espacement généralement parallèle, un premier et un second guides de câble supérieurs (1U, 2U) étant montés sur le support (1) à proximité des extrémités inférieures des premier et second rails de guidage (2, 3) respectivement, les premier et second guides de câble inférieurs (1L, 2L) étant montés sur le support à proximité des extrémités inférieures des premier et second rails de guidage (2, 3) respectivement, ayant un trajet de câble défini entre le premier guide de câble supérieur (1U), le second guide de câble supérieur (2U), le premier guide de câble inférieur (1L) et le second inférieur (2L), par un agencement de câbles nus, le trajet du câble (10, 11, 12) ayant au moins une première partie reliant le premier guide de câble supérieur au premier guide de câble inférieur, une seconde partie reliant le second guide de câble supérieur au second guide de câble inférieur, et une première partie supplémentaire reliant un des premiers guides de câble supérieur et inférieur à l'un des seconds guides de câble inférieur et supérieur, l'agencement de câbles nus (62) pouvant être entraîné en fonctionnement par un moyen d'entraînement (16), avec un premier et un second curseurs (13, 14) étant reliés à l'agencement de câbles nus (62), de façon à fournir un dispositif lève-vitre à double levage par câbles nus (34), **caractérisé en ce que** le moyen d'entraînement est monté sur une plaque (59) du support, la plaque ayant une surface d'étanchéité pour étanchéifier par rapport au côté « humide » d'un panneau intérieur (31) de porte associé.

2. Un dispositif lève-vitre tel que défini dans la revendication 1, dans lequel la première partie supplémentaire du trajet de câble relie le premier guide de câble supérieur au second guide de câble inférieur.

3. Un dispositif lève-vitre tel que défini dans les revendications 1 ou 2, dans lequel le guide de câble inclut une seconde partie supplémentaire reliant le second guide de câble supérieur au premier guide de câble inférieur.

4. Un dispositif lève-vitre tel que défini dans l'une quelconque des revendications précédentes, dans lequel le support inclut une partie allongée (52A, 52B, 52C, 52D, 54, 55) disposée de façon substantiellement parallèle et adjacente à une partie du trajet de câble.

5. Un dispositif lève-vitre tel que défini dans l'une quelconque des revendications précédentes, dans lequel le support inclut une partie allongée (54, 55) disposée de façon substantiellement parallèle et adjacente aux première et seconde parties du trajet de câble.

6. Un dispositif lève-vitre tel que défini dans l'une quelconque des revendications précédentes, dans lequel le support inclut une partie allongée (52A, 52B, 52C, 52D) disposée de façon substantiellement parallèle et adjacente aux première et seconde parties supplémentaires du trajet de câble.

7. Un dispositif lève-vitre tel que défini dans l'une quelconque des revendications précédentes, dans lequel le trajet de câble inclut une première partie d'entraînement reliant le moyen d'entraînement à au moins l'un des guides de câble parmi le premier supérieur, le second supérieur, le premier inférieur ou le second inférieur, et le support inclut une partie allongée (52B) disposée de façon substantiellement parallèle et adjacente à la première partie d'entraînement du trajet de câble.

8. Un dispositif lève-vitre tel que défini dans la revendication 7, dans lequel le trajet de câble inclut une seconde partie d'entraînement reliant le moyen d'entraînement à un autre guide de câble parmi le premier guide de câble supérieur, le second guide de câble supérieur, le premier guide de câble inférieur ou le second guide de câble inférieur, et le support inclut une partie allongée (52D) disposée de façon substantiellement parallèle et adjacente à la seconde partie d'entraînement du trajet de câble.

9. Un dispositif lève-vitre tel que défini dans l'une quelconque des revendications 4 à 8, dans lequel ladite partie allongée s'étend au moins jusqu'à l'un des guides de câble parmi le premier guide de câble supérieur (1U), le second guide de câble supérieur (2U), le premier guide de câble inférieur (1L) ou le second guide de câble inférieur (2L).

10. Un dispositif lève-vitre tel que défini dans l'une quelconque des revendications 4 à 9, dans lequel ladite partie allongée est généralement en forme de « U » en section transversale.

11. Un dispositif lève-vitre tel que défini dans l'une quelconque des revendications précédentes, dans lequel le support inclut une partie généralement en forme de « X » (52A, 52B, 52C, 52D), avec les bras du « X » disposée de façon parallèle et adjacente sur des parties du trajet de câble.

12. Un dispositif lève-vitre tel que défini dans la revendication 11, dans lequel la partie généralement en forme de « X » (52A, 52B, 52C, 52D) relie des parties du support disposée de façon parallèle et adjacente aux premier et second rails de guidage (2, 3).

13. Un dispositif lève-vitre tel que défini dans l'une quelconque des revendications précédentes, dans lequel le support (1) inclut des moyens de montage pour au moins un composant fonctionnel d'une porte, tel que :
un haut-parleur (71),
une poignée de porte intérieure (19),
un soutien flexible de loquet de porte (57),
un loquet de porte (20),
un capot de protection de loquet (26),
et un séparateur de câbles nus (7).

14. Un dispositif lève-vitre tel que défini dans l'une quelconque des revendications précédentes, dans lequel le moyen d'entraînement est monté sur une surface intérieure (« sèche ») de la plaque (59) quand on considère un véhicule associé.

15. Un dispositif lève-vitre tel que défini dans l'une quelconque des revendications précédentes, dans lequel au moins un guide de câble (1U, 2U, 1L, 2L) est monté à l'extérieur d'une limite définie par la surface d'étanchéité.

16. Un dispositif lève-vitre tel que défini dans la revendication 15, dans lequel 2, 3 ou 4 guides de câble (1U, 2U, 1L, 2L) sont montés à l'extérieur d'une limite telle que définie par la surface d'étanchéité.

17. Un dispositif lève-vitre tel que défini dans l'une quelconque des revendications précédentes, incluant en outre une vitre (25).

18. Une porte incluant un dispositif lève-vitre tel que défini dans l'une quelconque des revendications précédentes, la porte du véhicule incluant un panneau intérieur de porte (31) ayant une ouverture (46) qui permet le passage du moyen d'entraînement, lors du montage du dispositif lève-vitre sur la porte.
